# EUROPÄISCHE PATENTSCHRIFT

(11) **EP 2 630 230 B1**
(45) Veröffentlichungstag und Bekanntmachung des Hinweises auf die Patenterteilung: **26.11.2014**
(21) Anmeldenummer: 11772902.0
(22) Anmeldetag: 20.10.2011
(51) Int. Cl.: C12C 5/00, C12C 7/22, C12C 7/26

(54) **VERFAHREN UND VORRICHTUNG ZUM STEUERN DER WARMWASSERERZEUGUNG BEIM BRAUEN VON BIER IN EINER BIERBRAUEREI**
METHOD AND DEVICE FOR CONTROLLING THE GENERATION OF HOT WATER WHEN BREWING BEER IN A BREWERY
PROCÉDÉ ET DISPOSITIF POUR COMMANDER LA GÉNÉRATION D'EAU CHAUDE LORS DU BRASSAGE DE LA BIÈRE DANS UNE BRASSERIE

(30) Priorität: 21.10.2010 DE 102010042765
(43) Veröffentlichungstag der Anmeldung: 28.08.2013
(73) Patentinhaber: Krones AG, 93073 Neutraubling (DE)
(72) Erfinder: GRUBER, Robert, 84072 Abens / Gemeinde Au (DE); KAMMERLOHER,Helmut, 85354 Freising (DE); FRIEDRICH, Michael, 85354 Freising (DE)
(74) Vertreter: Grünecker, Kinkeldey, Stockmair & Schwanhäusser
(86) Internationale Anmeldenummer: PCT/EP2011/005291
(87) Internationale Veröffentlichungsnummer: WO 2012/052175

(56) Entgegenhaltungen:
- EP-A1- 1 705 242
- EP-A2- 1 264 876
- DE-A1-102007 054 429
- ECKART FIEDERER: "Praxisorientierte Ansätze für erfolgreiches Energiemanagement", BETRIEBLICHES ENERGIEMANAGEMENT, 1. März 2001 (2001-03-01), Seiten 1-11, XP55019835,
- FISCHER S: "Optimierung des Wärme- und Wasserhaushaltes im Sudhaus = Optimization of heat and water economy in the brewhouse", BRAUWELT, NUERNBERG, DE, Bd. 135, Nr. 38-39, 1. Januar 1995 (1995-01-01), Seite 1974, XP009156737, ISSN: 0724-696X

## Beschreibung

Die Erfindung betrifft ein Verfahren zur Steuerung der Warmwassererzeugung beim Brauen von Bier in einer Bierbrauerei nach dem Oberbegriff des Anspruchs 1 sowie eine entsprechende Vorrichtung.

Bekanntermaßen wird in der Brauerei bei der Bierherstellung für unterschiedliche Prozesse Warmwasser benötigt. Dieses Warmwasser wird im Allgemeinen aus Warmwasserspeichern/- behältern zur Verfügung gestellt und jedenfalls teilweise durch Prozesse beim Brauprozess gewonnen, wie z.B. durch Abkühlen der Würze nach der Heißwürzebehandlung. Wenn hier von Warmwasserspeicher die Rede ist, meint dies im weiten Sinne Heißwasser jeder Temperatur, sowie unterschiedlicher Qualitäten wie z. B. Produktwasser (Wasser welches direkt mit Produkt in Berührung kommt, z. B. Brauwasser, Spülwässer), oder Servicewasser/Betriebswasser (Wasser welches nicht direkt mit Produkt in Berührung kommt, z. B. Sperrwasser für Pumpen, Spritzstellen zur Gebäudereinigung, Wasser als Wärmeträger für Energiekreisläufe). Die Menge des von der Brauerei benötigten Warmwassers hängt von den verschiedensten Parametern ab, wie z.B. der Sudzahl pro Tag/Woche, der Sudfolge, der zu brauenden Biersorten, der geplanten Reinigungszyklen, der Spül- und Transferwassermengen und aber auch der Ausschlagwürzemengen. Bei bekannten Brauprozessen wird in einem Warmwasserbehälter z. B. warmes Brauwasser z. B. zwischen 70°C und 100°C vorgehalten, um dann beim Brauprozess verwendet werden zu können. Wenn wegen unterschiedlicher Brauverfahren und/oder -sorten und/oder Spülwassermengenbedarf oder dergleichen unterschiedliche Warmwassermengen benötigt werden, kann im Allgemeinen nicht flexibel auf diese Anforderungen reagiert werden. Oftmals entsteht während des Brauprozesses im Sudhaus ein Überschuss an warmem Brauwasser, der nicht bevorratet werden kann. Dieses warme Überschusswasser wird verworfen.

So übersteigt das z. B. bei der Würzekühlung (oder auch bei anderen Prozessen) erzeugte warme Wasser, insbesondere Brauwasser, in vielen Fällen den Warmwasserbedarf einer gesamten Brauerei. Insbesondere in wärmeren Regionen oder zur Mitte oder zum Ende der Produktionswoche hin kommt es zu einem deutlichen Warmwasserüberschuss im Brauwassertank, so dass dieses über den Gully verworfen werden muss. Kann oder darf keine große Menge an Warmwasser über den Kanal abgeleitet werden, muss die bei der Kühlung der Würze erzeugte Warmwassermenge durch Einsatz eines Kühlers unter hohem Energieeinsatz (vornehmlich elektrische Energie) reduziert (abgekühlt) werden. So ist es nicht verwunderlich, dass die Kälteanlage bis zu 40 % und mehr des gesamten Strombedarfs einer Brauerei ausmacht. Zusammenfassend kann gesagt werden, dass bei den bekannten Verfahren durch die teils massive Warmwasserüberproduktion und den zur Beseitigung notwendigen hohen anlagentechnischen und energetischen Aufwand wertvolle Ressourcen vernichtet werden. Denn der Warmwasserüberschuss kann nur unter hohem Energieeinsatz und enormer Wärmemengenvernichtung bei gleichzeitigem Frischwasserverbrauch (z. B. Kalt- und/oder Eiswasser und/oder Glycol und/oder andere Kälteträger und/oder Kältemittel) abgeführt werden. Die bekannten Verfahren weisen also große Mängel bei Energieeffizienz und Umweltfreundlichkeit auf.

Im Allgemeinen arbeiten bekannte Systeme daher nicht energie- und/oder verbrauchsoptimiert und/oder vorausschauend, so dass der Erfindung die Aufgabe zugrunde liegt, den Brauprozess unter weiterer Einsparung der benötigten Energie und Ressourcen durchzuführen.

In der EP 1 264 876 A2 wird ein Verfahren zum Vorkühlen von Würze nach der Würzekochung und vor der Abtrennung des Heisstrubes in einer Trubentfernungseinrichtung, beispielsweise einem Whirlpool, zum Reduzieren der thermischen Belastung der Würze beschrieben.

In der EP 1 705 242 A1 wird eine Brauerei beschrieben, in der die Kälteversorgung eine sorptive Kälteanlage aufweist, deren Wärmeenergiebedarf zumindest teilweise über die von Sonnenkollektoren erzeugte Wärmeenergie gedeckt wird.

In der DE 10 2007 054429 A1 wird ein Brauverfahren beschrieben, welches die Schritte des Entnehmens eines eine Ausgangstemperatur aufweisenden Fluids aus einem Wärmespeicher und Zuführens des Fluids zu mehreren Wärmeverbrauchern zur Abgabe von Wärme und Rückführen des eine Resttemperatur aufweisenden Fluids zu dem Wärmespeicher umfasst.

Diese Aufgabe wird bei dem erfindungsgemäßen Verfahren dadurch gelöst, dass der Warmwasserbedarf der Brauerei unter Berücksichtigung vergangenheitsorientierter und/oder zukunftsorientierter Parameter in einem Steuerungsrechner ermittelt und die Warmwassererzeugung zumindest auch durch Veränderung der am Würzekühler eingesetzten Kälteträgertemperatur und/oder Kältemitteltemperatur gesteuert wird. Durch die Variabilisierung der Kaltwassertemperatur und/oder Eiswassertemperatur lässt sich so die zu erzeugende Warmwassermenge steuern. Dabei erfasst die Steuerung bevorzugt sowohl vergangenheitsorientierte (z.B. Füllstand des Warmwassertanks, Wasserbedarf für einen Reinigungszyklus, Wasserbedarf für Reinigungsschritte, bzw. Reinigungen im Allgemeinen) als auch zukunftsorientierte Informationen (z.B. Sorte, Sudzahl pro Tag/Woche, Spülwässerbedarf) die Einfluss auf den weiteren Warmwasserbedarf haben und Aussagen darüber erlauben, wie viel Warmwasser für die nächsten Prozessschritte vorzugsweise im Sudhaus, jedoch auch Gärkeller und/oder Filtration und/oder Abfüllung und/oder anderen Produktionsbereichen und/oder anderen Bereichen, benötigt wird.

Aus diesen vergangenheitsorientierten und zukunftsorientierten Parametern kann die Steuerung dann den optimalen Warmwasserbedarf ermitteln und über die Veränderung der am Würzekühler eingesetzten Kälteträgertemperatur , wie z.B. der Kaltwassertemperatur und/oder Eiswassertemperatur die bei der Würzeabkühlung entstehende Warmwassermenge variieren. Damit ist es möglich, die Menge an Warmwasser immer ausreichend, "Just in Time" und ohne "Überbevorratung", aber äußerst energieeffizient zu steuern. Auch auf kurzfristige Veränderungen kann mit dem erfindungsgemäßen Steuerungsverfahren in besonders effizienter Art und Weise reagiert werden. Wenn von vergangenheits- und zukunftsorientierten Parametern die Rede ist, so beinhaltet dies auch aktuelle Parameterwerte.

Als Beispiele für Kälteträger sind insbesondere Kaltwasser, Eiswasser, Sole und Glycol zu nennen, aber auch Alkohol-Wasser-Gemisch oder Luft. Jedoch ist die Erfindung nicht auf diese Kälteträger beschränkt. Als Kältemittel sind vorzugsweise Ammoniak (NH₃), CO₂, und Frigen zu nennen, jedoch wird darauf hingewiesen, dass auch jedes andere Kältemittel einsetzbar ist. Dabei versteht man unter Eiswasser das über die Kälteanlage erzeugte Kaltwasser, während mit Kaltwasser das aus der normalen Wasserversorgung, z.B. dem Brunnen der Brauerei gewonnene Wasser gemeint ist.

Zur Wärmerückgewinnung werden insbesondere ein- oder mehrstufige Wärmetauscher, vorzugsweise Plattenwärmetauscher mit unterschiedlichen Kälteträger und/oder Kältemittel eingesetzt.

Für die Vorhaltung von Wasser und/oder Kälteträgern sowie Bereitstellung von Energie in Energiespeichertanks sind sämtliche üblichen Bauformen/Bauarten und/oder Varianten, wie zum Beispiel ein kombinierter Schichtenspeicher, Verdrängungsspeicher, einzelne Speichertanks für bestimmte und/oder unterschiedliche Temperaturniveaus und Kombinationen hieraus möglich.

Unter Warmwasserspeicher sind insbesondere einzelne Speichertanks für bestimmte und/oder unterschiedliche Temperaturniveaus und/oder Energiespeichertanks und/oder Schichtenspeichertanks und/oder Kombinationen hieraus zu verstehen. Diese können sowohl für den Betrieb mit Brauwasser oder auch Betriebswasser ausgeführt sein.

In vorteilhafter Ausgestaltung der Erfindung ist vorgesehen, dass die Temperatur und die Wassermenge im Warmwasserspeicher und/oder Energiespeichertank und im Kaltwasserspeicher und/oder Eiswasserspeicher erfasst und neben anderen Parametern wie z. B. Biersorte, Sudzahl pro Tag/Woche, in die Steuerung eingegeben wird. Um eine optimale Steuerung vornehmen zu können ist es vorteilhaft, wenn man aus der Wassermenge und der Temperatur des Wassers sowohl im Warmwasserspeicher und/oder Energiespeichertank als auch im Kaltwasserspeicher und/oder Eiswasserspeicher auf die Wärmeenergie schließen kann, die dort vorrätig ist, so dass dies dann bei der Berechnung der Parameter für die weiteren Sudabfolgen mit berücksichtigt werden kann.

In besonders vorteilhafter Ausgestaltung der Erfindung ist vorgesehen, durch Energieentnahme auf einem vergleichsweise hohen Temperaturniveau in der ersten Stufe des Würzekühlers, beispielsweise für einen Heizenergiespeicher, gezielt eine so große Wärmemenge abzuführen, dass dies für sich genommen eine Warmwasserunterversorung im Sudhaus bzw. in der Brauerei zur Folge hätte. Dem wird gemäß der vorliegenden Erfindung jedoch an einer zweiten und/oder weiteren Stufe des Würzekühlers durch gezielte Warmwassererzeugung entgegen gesteuert. Dabei ist darauf zu achten, dass die Gesamtanlage anhand zukunfts- und vergangenheitsorientierter Parameter im Hinblick auf energetische Aspekte in einem definierten Optimalzustand gefahren und gesteuert wird. Dieser definierte Optimalzustand kann beispielsweise anhand von Zielparametern, wie beispielsweise Temperaturbereichen, Füllstandsbereichen und dergleichen definiert und durch entsprechende Messungen (z. B. Temperaturmessung, Füllstandsmessung) festgestellt werden. In einer speziellen Ausführungsform eignet sich auch eine Variation der Energieentnahme in der ersten Stufe des Würzekühlers als Parameter zur Steuerung der weiteren Energieflüsse und Stellparameter.

Als zukunftsorientierte und als vergangenheitsorientierte Parameter kommen Informationen in Frage, die für den erforderlichen Warmwasserbedarf ausschlaggebend sind, wie z.B. die Sudzahl pro Tag/Woche, die Sudfolge, die Biersorten, die Einmaischtemperatur, die geplante Reinigung, die Spül- und Transferwassermengen und/oder die Ausschlagwürzemengen. Wenn man diese Parameter für die Vergangenheit erfasst und dann die für die Zukunft gewünschten Parameter für weitere nachfolgende Sudabfolgen eingibt, kann die Steuerung aus diesen Daten den jeweils erforderlichen Warmwasserbedarf ermitteln und zur Verfügung stellen.

Für die Veränderung der am Würzekühler eingesetzten Kaltwassertemperatur und/oder Eiswassertemperatur gibt es mehrere Möglichkeiten. Bei einer Variante wird die erforderliche Temperatur vorzugsweise bereits am Eiswasserkühler eingestellt und die zu verwendenden Eiswassermengen im Eiswasserspeicher eingelagert.

Bei einer anderen Variante kann es vorteilhaft sein, das Kaltwasser und/oder Eiswasser hinsichtlich Temperatur oder Menge durch Zumischen von Wasser, z. B. Brauwasser aus einem kalten und/oder warmen Wasseranschluss, beispielsweise in Form eines Wassermischers ausgestaltet zu verändern, so dass dann am Würzekühler über die Zumischung von Wasser, z.B. Brauwasser die gewünschte Kaltwassertemperatur und/oder Eiswassertemperatur und -menge zur Verfügung stehen.

Bei einer anderen Variante wird die Wassertemperatur im Eiswasserspeicher auf einen konstanten Wert, z.B. zwischen 2°C und 3°C gehalten und es wird die Veränderung der am Würzekühler eingesetzten Eiswassertemperatur durch Zumischung von Wasser, bevorzugt aus einem Brauwasseranschluss eingestellt. Das Zumischen dieses Wassers kann bei beiden genannten Varianten vorteilhaft sein, nämlich wenn sowohl mit dem Eiswasserkühler eine variable Eiswassertemperatur zur Verfügung gestellt wird als auch, wenn eine konstante, im Eiswasserspeicher und/oder Kaltwasserspeicher vorliegende Temperatur zugrunde gelegt wird.

Bei einer weiteren vorteilhaften Ausgestaltung wird in einem ersten Schritt ein Teil der Wärmemenge der behandelten heißen Würze in einen Energiespeicher, in dem vorzugsweise Betriebswasser zirkuliert, ausgekoppelt und in einem zweiten und/oder weiteren Schritt, vorzugsweise mit Brauwasser, die heiße Würze z.B. auf Anstelltemperatur abgekühlt. Vorzugsweise ist die Anstelltemperatur der übergeordnete Leitparameter der erfindungsgemäßen Steuerung. Alle anderen Parameter werden dann abhängig von der gewünschten Anstelltemperatur ermittelt und geregelt. Bei Bedarf kann aber auch ein anderer Parameter als Leitparameter definiert werden. Die Wärmemenge wird beim zweiten oder weiteren Schritt in den Warmwasserspeicher ausgekoppelt. Auch diese Aufteilung in einen ersten Schritt und einen zweiten und/oder weiteren Schritt und die jeweiligen Mengen können über die Steuerung optimiert vorgenommen werden. Das im Energiespeicher zirkulierende heiße Betriebswasser kann zum Beheizen von Wärmeverbrauchern eingesetzt werden wie z.B. Läuterwürzeerhitzer oder auch Maischbottich. Selbstverständlich geht dies sowohl mit Brauwasser, Betriebswasser als auch anderen Wärmeträgern wie beispielsweise Thermoölen und dergleichen. Das in einem zweiten oder weiteren Schritt erzeugte Warmwasser wird vorzugsweise für verschiedene Produktionszwecke verwendet. Dabei ist der Ausdruck erster, zweiter und weiterer Schritt so zu verstehen, dass dadurch die Reihenfolge nicht festgelegt ist, d.h., dass z.B. der zweite Schritt im Prozess auch vor dem ersten oder weiteren stattfinden kann.

Gemäß einer bevorzugten Ausführungsform erfolgt dann die Steuerung der Warmwassererzeugung durch eine Steuerung des Verhältnisses zwischen der in dem ersten Schritt ausgekoppelten Energie und der in einem zweiten oder weiteren Schritt ausgekoppelten Energie.

Eine Vorrichtung zur Durchführung des Verfahrens umfasst einen Warmwasserspeicher und einen Kaltwasserspeicher und/oder Eiswasserspeicher sowie einen ein oder mehrstufigen Würzekühler zum Abkühlen der Würze mit Hilfe von Kaltwasser und/oder Eiswasser aus dem Kaltwasserspeicher und/oder Eiswasserspeicher und ist dadurch gekennzeichnet, dass eine Steuerung zur Eingabe und/oder Erfassung vergangenheitsorientierter und/oder zukunftsorientierter, den Warmwasserbedarf der Brauerei beeinflussender Parameter sowie zur Steuerung der am Würzekühler eingesetzten Kälteträgertemperatur, wie z.B.Kaltwassertemperatur und/oder Eiswassertemperatur, vorgesehen ist. In einem mehrstufigen Würzekühler können eine oder mehrere Stufen auch mit anderen Kälteträgern versorgt werden. In vorteilhafter Ausgestaltung der Vorrichtung ist zwischen Würzekühler und Kaltwasserspeicher und/oder Eiswasserspeicher ein Wasseranschluss für kaltes und/oder warmes Wasser bevorzugt Brauwasser vorhanden, um die Kaltwassertemperatur und/oder Eiswassertemperatur, die am Würzekühler eingesetzt wird, beeinflussen zu können.

Im Allgemeinen können bei dem erfindungsgemäßen Verfahren beispielsweise folgende Parameter und Vorrichtungen zur Steuerung vorgesehen sein bzw. umwelt- oder jahreszeitenabhängig vorgegeben sein: Frischwassertemperatur, Kalt- bzw. Eiswassertemperatur zum Würzekühler, Fluss des Kalt- bzw. Eiswassers zum Würzekühler, frequenzgeregelte Pumpe zum Würzekühler, Anstelltemperatur der Würze, Würzefluss, Temperatur der Würze an den unterschiedlichen Würzeeintrittszonen am mehrstufigen Würzekühler, zu erzeugende Warmwassertemperatur und Warmwassermenge, zum Kühlwasser beigemischte Wassertemperatur vor dem Würzekühler.

Die Erfindung wird im Folgenden anhand der in den Figuren dargestellten Ausführungsbeispiele weiter erläutert und beschrieben. Dabei zeigt:
- Fig. 1: in schematischer Darstellung den Teil eines Wasserkreislaufs einer Brauerei zur Erläuterung der der Erfindung zugrundeliegenden Idee,
- Fig. 2: den Wasserkreislauf nach einem ersten Ausführungsbeispiel,
- Fig. 3: den Wasserkreislauf nach einem zweiten Ausführungsbeispiel und
- Fig. 4: eine weitere Übersichtsskizze zur Erläuterung der Erfindung.

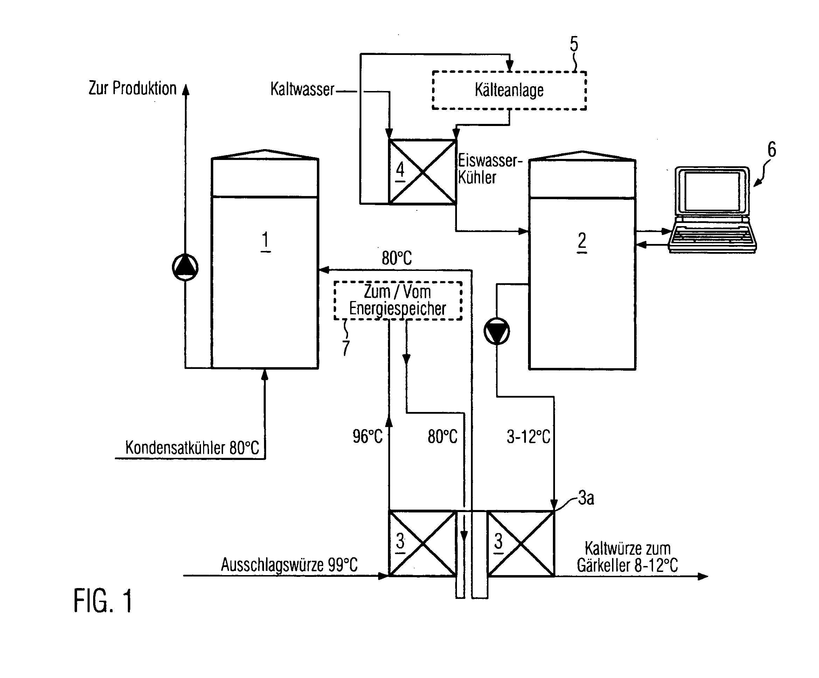

In der Fig. 1 ist der grundsätzliche Aufbau einer Vorrichtung gezeigt, mit der das erfindungsgemäße Verfahren ausgeführt werden kann.

Diese Figur zeigt den Teil eines Wasserversorgungsnetzes, wie es für die Verwendung in einer Brauerei zum Brauen von Bier vorgesehen ist. Dieses Wassernetz umfasst unter anderem einen zweistufigen Würzekühler 3, einen Energiespeicher 7 sowie einen Warmwassertank 1. In der ersten Stufe der Würzekühlung 3 wird z.B. Wasser von 80°C auf 96°C aufgeheizt. Als Wärmeträger ist z.B. auch insbesondere Brauwasser und/oder Betriebswasser und/oder Thermoöl möglich. Der Energiespeicher 7 (hier nur gestrichelt dargestellt) kann in Form eines Schichtenspeichers ausgeführt sein, in dem heißes Wasser, bevorzugt Betriebswasser bis nahe Kochtemperatur oder druckbeaufschlagt auch darüber, bereit gestellt wird. Auch wenn hier nicht dargestellt kann das im Energiespeicher 7 enthaltene Wasser für Heizzwecke verwendet werden. In der zweiten Stufe wird warmes Wasser, z.B. mit 80°C, bevorzugt Brauwasser, erzeugt, welches im Warmwassertank 1 vorgehalten wird. Dieses Wasser wird in der Produktion verwendet.

Das System umfasst des Weiteren einen Eiswassertank 2, in dem Eiswasser vorrätig gehalten wird, das z.B. über eine Kälteanlage 5 und einen Eiswasserkühler 4 aus kaltem Wasser, bevorzugt Brauwasser erzeugt wird. Auch wenn hier nicht dargestellt, ist anstelle eines Systems zur Eiswassererzeugung und Eiswasservorhaltung auch nur ein Kaltwassertank und/oder Eiswassertank und/oder Schichtenspeicher in verschiedenen Ausführungen denkbar. Typischerweise liegt die Temperatur des Eiswassers im Eiswassertank 2 bei 3°C bis 12°C, üblicherweise aber bei 2°C bis 4°C. Der Eiswassertank 2 ist mit dem Würzekühler 3 verbunden, um dort die heiße Würze abzukühlen. Dieser Vorgang wird über den Steuerungsrechner 6 gesteuert, der hier lediglich schematisch angedeutet ist.

Die Erfindung sieht nun vor, in dem Steuerungsrechner 6 vergangenheitsorientierte und zukunftsorientierte Parameter zu erfassen bzw. abzulegen und daraus den Warmwasserverbrauch für die Folgezeit zu ermitteln. Um den richtigen Warmwasserbedarf energiesparend erhalten zu können, ist vorgesehen, dass anders als im Stand der Technik, die Temperatur, mit der das Kaltwasser und/oder Eiswasser vom Kaltwasserspeicher und/oder Eiswasserspeicher 2 am Würzekühler 3 eingesetzt wird, so gesteuert wird, dass darüber mehr oder weniger, jedenfalls die optimale Menge an Warmwasser für die Produktion gewonnen werden kann. Das System wird so ausgelegt, dass der Rechner die optimale und in den nächsten Betriebsstunden der Brauerei benötigten Warmwassermengen aus den ihm überlassenen Daten ermittelt und dann entsprechend steuert.

Damit das System zuverlässig arbeiten kann, wird über nicht dargestellte, geeignete Messtechnik wie z.B. Temperaturfühler die Temperatur und die Wassermenge sowohl im Warmwasserspeicher 1 als auch im Eiswasserspeicher 2 erfasst. Der Rechner kennt dann den Energieinhalt und das Energieniveau sowohl im Warmwasserspeicher 1 als auch im Eiswasserspeicher 2 und kann mit den erfassten Parametern die optimalen Werte für den weiteren Bedarf errechnen. Die Erfindung ist nicht auf dieses Ausführungsbeispiel beschränkt sondern ist für unterschiedliche Kombinationen von Warmwassertank und/oder Kaltwassertank und/oder Eiswassertank und/oder Arten von Schichtenspeichern einsetzbar.

Als zukunftsorientierte und als vergangenheitsorientierte Parameter können z.B. Informationen über den Füllstand des Warmwassertanks, die Sudzahl pro Tag/Woche und/oder die Sudfolge, die zu verarbeitenden Sorten, die dafür benötigte Anstelltemperatur, die Zyklen der geplanten Reinigungen, der Spül- und Transferwassermengen und/oder der Ausschlagwürzemengen erfasst und in dem Steuerungsrechner 6 verarbeitet werden. Zur Einstellung der Temperatur des Eiswassers am Einlauf 3a in den Würzekühler gibt es verschiedene Varianten.

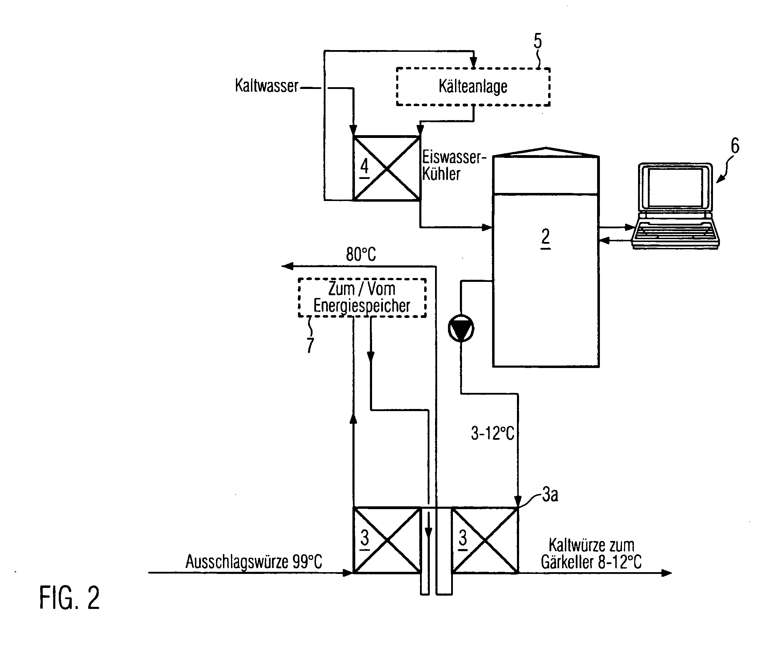

So ist in der Fig. 2 ein Ausführungsbeispiel dargestellt, bei dem das Eiswasser über die Kälteanlage 5 und den Eiswasserkühler 4 mit der erforderlichen, jeweils vom Steuerungsrechner 6 errechneten Temperatur erzeugt wird. Dieses Wasser wird dann mit dieser Temperatur, die also je nach weiterem Bedarf unterschiedlich sein kann, im Eiswassertank 2 gespeichert.

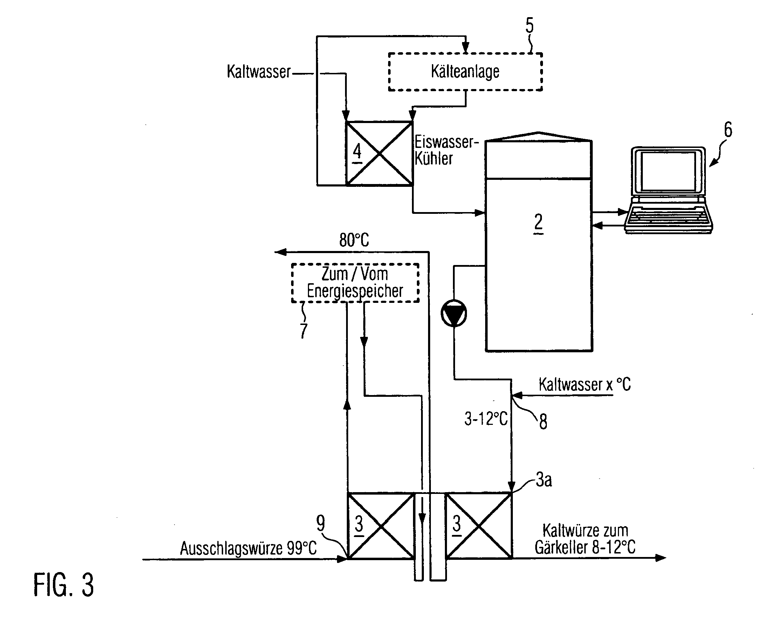

Bei einem weiteren Ausführungsbeispiel, das in Fig. 3 dargestellt ist, wird bei einer ersten Variante Eiswasser mit einer festen Temperatur, z.B. 3°C, über die Kälteanlage 5 und den Eiswasserkühler 4 erzeugt und im Eiswassertank 2 vorgehalten. Die Veränderung der am Einlauf zum Würzekühler 3 anstehenden Eiswassertemperatur entsprechend dem gewünschten Wert erfolgt durch Beimischung von Kaltwasser durch einen angedeuteten Wassermischer 8. Durch geeignete Mengenregelung der zu mischenden Wassermengen lässt sich so ebenfalls die Temperatur des am Würzekühler 3 an der Stelle 3a eintretenden Kälteträgers verändern. Die Beimischung von kaltem oder warmem Wasser am Wassermischer 8 kann sowohl für den Fall vorgesehen sein, dass der Eiswasserkühler 4 kaltes Wasser mit variabler Temperatur produziert, d.h. also, dass die Temperatur im Eiswasserspeicher 2 variabel ist, sie kann aber auch für den Fall vorgesehen sein, dass die Vorhaltung des Eiswassers im Eiswasserspeicher 2 mit fester Temperatur erfolgt. Insbesondere bei Vorhaltung des Eiswassers im Eiswasserspeicher 2 mit fester Temperatur kann eine (nicht dargestellte) Regelung des Kaltwasserzulaufs in den Eiswasserkühler vorgesehen sein, beispielsweise mittels eines Regelventils. Die bereitgestellte Wassermenge im Eiswasserspeicher 2 kann anhand dieser Regelung entsprechend dem jeweiligen Bedarf angepasst werden, beispielsweise derart, dass eine möglichst kontinuierliche und gleichmäßige Energieabnahme an der Kälteanlage 5 bewirkt wird. Dies wirkt sich insbesondere auch aus energetischen Gesichtspunkten positiv aus, da ein ständiges An- und Abschalten vermieden wird, wodurch die Kälteanlage bei gleichbleibender Auslastung ohne Leistungsspitzen besonders wartungsfreundlich betrieben wird.

Unter kaltem Wasser ist beispielsweise Frischwasser, Kaltwasser aus öffentlichen Leitungsnetzen und dergleichen zu verstehen. Das kalte Wasser könnte auch zusätzlich gekühlt sein und beispielsweise aus dem Rücklauf eines separaten Produktionsschritts zugeführt werden. Unter warmem Wasser ist beispielsweise Warmwasser aus öffentlichen Leitungsnetzen und dergleichen zu verstehen. Es könnte insbesondere nach Erwärmung aus dem Rücklauf eines separaten Produktionsschritts zugeführt werden. Am Wassermischer 8 wird somit vorzugsweise Wasser beigemischt, das aufgrund von Abwärme/Kälte aus einem beliebigen Produktionsprozess oder aufgrund der jeweiligen Leitungstemperatur bereits eine für das erfindungsgemäße Verfahren geeignete Temperatur hat. Dadurch lässt sich der Energieaufwand für das Einstellen einer geeigneten Mischtemperatur hinter dem Wassermischer 8 minimieren.

Für alle Varianten ist es vorteilhaft, wenn am Würzekühlereinlauf 9 auf der heißen Würzeseite ein Teil der Wärmeenergie der Würze in den Energiespeicher 7 ausgekoppelt wird und dann in einem zweiten oder weiteren Schritt das Abkühlen der heißen Würze auf Anstelltemperatur erfolgt.

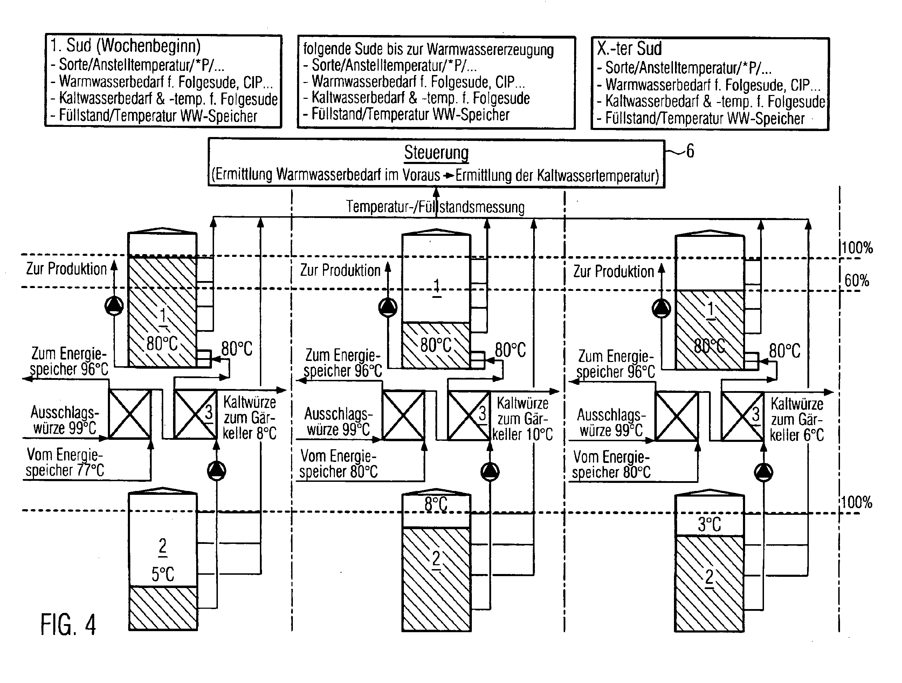

Anhand von Fig. 4 wird das erfindungsgemäße Verfahren nun noch weiter erläutert:
Diese Figur zeigt jeweils verschiedene Betriebszustände einer Anlage, wobei man erkennt, dass je nach Warmwasserbedarf im Eiswasserspeicher 2 Eiswasser mit unterschiedlicher Menge und auch unterschiedlicher Temperatur vorrätig gehalten wird. Die Menge und die Temperatur wird über den Steuerungsrechner 6 aus Daten ermittelt, die oberhalb dem Rechteck "Steuerung" beispielhaft aufgelistet sind, also z.B. Informationen über den ersten Sud bei Wochenbeginn und Informationen über die weiteren Sude und/oder Reinigungen beispielsweise nach Produktionsende (z. B. am Ende der Produktionswoche). Aus dieser Sudabfolge und der geplanten Anzahl der Sude, der zu brauenden Sorten usw. errechnet die Steuerung 6 den erforderlichen Warmwasserbedarf und steuert die Bereitstellung des warmen Wassers unter anderem auch eben über die variable Temperatur und Menge des Eiswassers, das mit (hier nicht dargestellt) oder ohne Beimischung von warmen oder kalten Wasser vorzugsweise Brauwasser dann am Würzekühler 3 eingesetzt wird.

Auf diese Weise kann bei optimalem Energie- und Wasserhaushalt ein optimales Ergebnis erzielt werden.

Konkreter kann z.B. bei Beginn der Produktionswoche der Warmwassertank vorzugsweise voll sein, wie das in der linken Abbildung der Fig.4 angedeutet ist, (Warmwassertank linke Abbildung). Der Eiswassertank (Eiswassertank 2 in der linken Abbildung) ist mit soviel Eiswasser mit z.B. 5°C gefüllt, dass die Menge ausreicht um durch Wärmerekuperation, vorzugsweise bei der Würzekühlung soviel Warmwasser zu erzeugen wie laut den erfassten und damit berechneten Werten für die weitere Prozessabfolge benötigt wird. Hierbei ist zu beachten, dass im Normalfall bereits vor dem Prozessschritt "Würzekühlen" bereits der nächste Sud begonnen hat, d.h. das noch vorrätige Warmwasser muss ausreichen um den Bedarf bis zu Beginn der (ersten) Würzekühlung zu decken. Der eigentliche Bedarf unter Einbezug des vorrätigen Warmwassers im Warmwassertank von Würzekühlung zu Würzekühlung kann errechnet und prognostiziert werden. Außerdem werden auch Ereignisse wie zum Beispiel eine Reinigung nach Produktionsende im Vorhinein berücksichtigt.

Unter dem Ausdruck "folgende Sude bis zur Warmwassererzeugung" wie im mittleren Abschnitt der Figur 4 dargestellt, versteht man die Sude, die bereits begonnen haben bis der erste Sud den Prozessschritt "Würzekühlung" erreicht hat, z. B. den 2. - 4. Sud.

In der mittleren Abbildung "Warmwassertank" erkennt man, dass dieser einen geringen Füllstand aufweist. Dabei wurde für die anstehenden Prozesse berechnet (zukunftsorientierte Parameter), dass viel Warmwasser benötigt wird. Aus diesem Grund wird nun eine relativ hohe Menge an Eiswasser mit relativ hoher Temperatur z. B. 8°C vorgehalten (Bei der Abkühlung von 1 hl Heißwürze von 99°C auf ca. 10°C entstehen mit Eiswasser von 5°C ca. 1,15 hl Warmwasser mit 80°C). Wenn man nun alle Parameter gleich lässt, aber Eiswasser mit einer Temperatur von 8°C im Eiswassertank vorhält, entstehen ca. 1,21 hl Warmwasser, mit denen dann der Warmwasserspeicher wieder aufgefüllt wird. Dies ist ein roulierender Prozess, welcher sowohl kurzfristige wie auch langfristige Ereignisse und Prozessschritte mit berücksichtigt. Unter einem langfristigen Ereignis kann zum Beispiel die Reinigung am Ende der Produktionswoche verstanden werden.

Die Warmwassererzeugung bzw. die Menge an erzeugtem Warmwasser kann durch Steuerung des Verhältnisses zwischen der in dem ersten Schritt, z. B. am ersten Wärmetauscher ausgekoppelten Energie und der in einem zweiten oder weiteren Schritt (z. B. am zweiten Wärmetauscher 3a) ausgekoppelten Wärmemenge gesteuert werden.

## Patentansprüche

1. Verfahren zur Steuerung der Warmwassererzeugung beim Brauen von Bier in einer Bierbrauerei, bei dem Warmwasser und Kalt- und/oder Eiswasser bereitgestellt werden und das Kalt- und/oder Eiswasser zumindest zum Teil zum Abkühlen der Würze verwendet wird, **dadurch gekennzeichnet, dass** der Warmwasserbedarf der Brauerei unter Berücksichtigung vergangenheitsorientierter und/oder zukunftsorientierter Parameter in einem Steuerungsrechner (6) ermittelt und die Warmwassererzeugung zumindest auch durch Veränderung der bei der Würzekühlung (3) eingesetzten Kälteträgertemperatur und/oder Kältemitteltemperatur gesteuert wird.

2. Verfahren nach Anspruch 1, **dadurch gekennzeichnet, dass** es sich bei dem Kälteträger insbesondere um Kaltwasser und/oder Eiswasser und/oder Sole und/oder Glycol handelt.

3. Verfahren nach Anspruch 1, **dadurch gekennzeichnet, dass** es sich bei dem Kältemittel insbesondere um Ammoniak und/oder CO₂ und/oder Frigen handelt.

4. Verfahren nach Anspruch 1, **dadurch gekennzeichnet, dass** die Temperatur und die Wassermenge des in einem Warmwasserspeicher (1) bereitgestellten Warmwassers und des im Kaltwasserspeicher und/oder Eiswasserspeicher (2) bereitgestellten Kalt- bzw. Eiswassers erfasst und in die Steuerung eingegeben werden.

5. Verfahren nach einem der Ansprüche 1 bis 4, **dadurch gekennzeichnet, dass** als zukunftsorientierte und/oder als vergangenheitsorientierte Parameter Informationen über Füllstand des Warmwassertanks und/oder Sudzahl pro Tag/Woche und/oder Sudfolge und/oder Sorten und/oder Anstelltemperatur und/oder geplante Reinigung und/oder Spül- oder Transferwassermengen und/oder Ausschlagwürzemengen etc. erfasst und in der Steuerung abgelegt werden.

6. Verfahren nach einem der vorangegangenen Ansprüche, **dadurch gekennzeichnet, dass** die zur Würzekühlung erforderliche Temperatur an dem Eiswasserkühler (4) und/oder der Kälteanlage (5) eingestellt und im Eiswasserspeicher (2) eingelagert wird.

7. Verfahren nach wenigstens einem der vorangegangenen Ansprüche, **dadurch gekennzeichnet, dass** die am Würzekühler (3) eingesetzte Kaltwassertemperatur und/oder Eiswassertemperatur und/oder Wassermenge durch Zumischen von kalten und/oder warmen Wasser durch einen Wassermischer (8) eingestellt wird.

8. Verfahren nach wenigstens einem der vorangegangenen Ansprüche, **dadurch gekennzeichnet, dass** in einem ersten Schritt ein Teil der Wärmemenge der heißen Würze in den Wärmespeicher (7) (Energiespeicher) ausgekoppelt und in einem zweiten oder weiteren Schritt ein Teil der Wärmemenge der heißen Würze in den Warmwasserspeicher (1) ausgekoppelt wird.

9. Verfahren nach Anspruch 8, **dadurch gekennzeichnet, dass** die Steuerung der Warmwassererzeugung durch Steuerung des Verhältnis zwischen der in dem ersten Schritt ausgekoppelten Energie und der in einem zweiten oder weiteren Schritt ausgekoppelten Energie erfolgt.

10. Vorrichtung zur Durchführung des Verfahrens nach einem der vorangegangenen Ansprüche, mit einem Warmwasserspeicher (1) und einem Kaltwasserspeicher und/oder Eiswasserspeicher (2) und mit einem ein- oder mehrstufigen Würzekühler (3) zum Abkühlen der Würze mit Hilfe von Kaltwasser und/oder Eiswasser aus dem Kaltwasserspeicher und/oder Eiswasserspeicher (1), **gekennzeichnet durch** eine Steuerung (6) zur Eingabe und/oder Erfassung vergangenheitsorientierter und/oder zukunftsorientierter, den Warmwasserbedarf der Brauerei beeinflussenden Parametern und zur Steuerung der am Würzekühler (3) ankommenden Kälteträgertemperatur und/oder Kältemitteltemperatur.

11. Vorrichtung nach Anspruch 7, **dadurch gekennzeichnet, dass** zwischen Würzekühler (3) und Kaltwasserspeicher und/oder Eiswasserspeicher (2) ein Wasseranschluss (8) für kaltes und/oder warmes Brauwasser vorgesehen ist.

12. Verfahren nach mindestens Anspruch 8, **dadurch gekennzeichnet, dass** es sich bei dem Wärmeträger im Wärmespeicher (7) insbesondere um Brauwasser und/oder Betriebswasser und/oder Thermoöl handelt.

## Claims

1. Method of controlling the generation of hot water when brewing beer in a brewery, whereby hot water and cold and/or chilled water are provided and at least some of the cold and/or chilled water is used to cool the wort, **characterised in that** the hot water requirement of the brewery is determined taking account of historical and/or future-oriented parameters in a control computer (6), and the generation of hot water is also controlled by at least varying the temperature of the cold carrier and/or the temperature of the cooling medium used for wort cooling (3).

2. Method as claimed in claim 1, **characterised in that** the cold carrier is cold water and/or chilled water and/or sols and/or glycol in particular.

3. Method as claimed in claim 1, **characterised in that** the cooling medium is ammonia and/or CO₂ and/or Frigen refrigerant in particular.

4. Method as claimed in claim 1, **characterised in that** the temperature and water quantity of the hot water supplied from the hot water storage (1) and of the cold water respectively chilled water supplied from the cold water storage and/or chilled water storage (2) is detected and input to the controller.

5. Method as claimed in one of claims 1 to 4, **characterised in that** information pertaining to the filling level of the hot water tank and/or brew number per day/week and/or brew sequence and/or types and/or setting temperature and/or scheduled cleaning and/or rinse or transfer water quantities and/or cast wort quantities, etc., are detected as future and/or historical-oriented parameters and stored in the controller.

6. Method as claimed in one of the preceding claims, **characterised in that** the temperature needed at the chilled water cooler (4) and/or the cooling system (5) to cool the wort is set and applied to the chilled water storage (2).

7. Method as claimed in at least one of the preceding claims, **characterised in that** the cold water temperature and/or chilled water temperature and/or water quantity used in the wort cooler (3) is set by admixing cold and/or hot water by means of a water mixer (8).

8. Method as claimed in at least one of the preceding claims, **characterised in that** some of the heat quantity of the hot wort is transferred to the heat storage (7) (energy storage) in a first step and some of the heat quantity of the hot wort is transferred to the hot water storage (1) in a second or another step.

9. Method as claimed in claim 8, **characterised in that** the generation of hot water is controlled by controlling the ratio between the energy transferred in the first step and the energy transferred in a second or another step.

10. Device for implementing the method as claimed in one of the preceding claims, comprising a hot water storage (1) and a cold water storage and/or chilled water storage (2) and comprising a single-stage or multi-stage wort cooler (3) for cooling the wort with the aid of cold water and/or chilled water from the cold water storage and/or chilled water storage (1), **characterised by** a controller (6) for inputting and/or detecting historical and/or future-oriented parameters influencing the hot water requirement of the brewery and for controlling the temperature of the cold carrier and/or the temperature of the cooling medium arriving at the wort cooler (3).

11. Device as claimed in claim 7, **characterised in that** a water connector (8) for cold and/or hot brewing liquor is provided between the wort cooler (3) and cold water storage and/or chilled water storage (2).

12. Method as claimed in at least claim 8, **characterised in that** the heat carrier in the heat storage (7) is brewing liquor and/or process water and/or heating oil in particular.

## Revendications

1. Procédé de commande de la production d'eau chaude au cours du brassage de bière dans une brasserie, comprenant la préparation et la mise à disposition d'eau chaude et d'eau froide et/ou glacée, l'eau froide et/ou glacée étant utilisée au moins en partie pour refroidir le moût, **caractérisé en ce que** la demande en eau chaude de la brasserie est déterminée dans un calculateur de commande (6) en tenant compte de paramètres de nature rétrospective et/ou orientés vers l'avenir, et la production d'eau chaude est au moins également commandée par variation de la température de fluide caloporteur et/ou de la température de fluide frigorigène mise en oeuvre lors du refroidissement du moût (3).

2. Procédé selon la revendication 1, **caractérisé en ce que** concernant le fluide caloporteur, il s'agit notamment d'eau froide et/ou d'eau glacée et/ou de saumure et/ou de glycol.

3. Procédé selon la revendication 1, **caractérisé en ce que** concernant le fluide frigorigène, il s'agit notamment d'ammoniaque et/ou de CO₂ et/ou de fréon.

4. Procédé selon la revendication 1, **caractérisé en ce que** l'on relève la température et la quantité d'eau de l'eau chaude disponible dans un accumulateur d'eau chaude (1), et de l'eau froide ou de l'eau glacée disponible dans l'accumulateur d'eau froide et/ou respectivement l'accumulateur d'eau glacée (2), et on introduit ces données dans la commande.

5. Procédé selon l'une des revendications 1 à 4, **caractérisé en ce que** concernant les paramètres orientés vers l'avenir et/ou de nature rétrospective, on relève et dépose dans la commande des informations relatives au niveau de remplissage du réservoir d'eau chaude, et/ou au nombre de brassins par jour/semaine, et/ou à la succession des brassins, et/ou aux sortes, et/ou à la température d'addition, et/ou au nettoyage programmé, et/ou aux quantités d'eau de rinçage ou de transfert, et/ou aux quantités de moût soutiré, etc..

6. Procédé selon l'une des revendications précédentes, **caractérisé en ce que** la température nécessaire au refroidissement du moût est réglée au niveau du refroidisseur d'eau glacée (4) et/ou de l'installation frigorifique (5), et stockée dans l'accumulateur d'eau glacée (2).

7. Procédé selon l'une au moins des revendications précédentes, **caractérisé en ce que** la température d'eau froide et/ou la température d'eau glacée et/ou la quantité d'eau, qui sont mises en oeuvre au niveau du refroidisseur de moût (3), sont réglées par addition d'eau froide et/ou chaude au moyen d'un mélangeur d'eau (8).

8. Procédé selon l'une au moins des revendications précédentes, **caractérisé en ce que** lors d'une première étape, une partie de la quantité de chaleur du moût chaud est extraite vers l'accumulateur de chaleur (7) (accumulateur d'énergie), et lors d'une deuxième étape ou une étape suivante, une partie de la quantité de chaleur du moût chaud est extraite vers l'accumulateur d'eau chaude (1).

9. Procédé selon la revendication 8, **caractérisé en ce que** la commande de la production d'eau chaude est effectuée par la commande du rapport entre l'énergie extraite lors de la première étape et l'énergie extraite lors de la deuxième étape ou une étape suivante.

10. Dispositif pour la mise en oeuvre du procédé selon l'une des revendications précédentes, comprenant un accumulateur d'eau chaude (1) et un accumulateur d'eau froide et/ou accumulateur d'eau glacée (2), ainsi qu'un refroidisseur de moût (3) à un étage ou à étages multiples, qui est destiné au refroidissement du moût à l'aide d'eau froide et/ou d'eau glacée en provenance de l'accumulateur d'eau froide et/ou de l'accumulateur d'eau glacée (2), **caractérisé par** une commande (6) prévue pour saisir et/ou relever des paramètres de nature rétrospective et/ou orientés vers l'avenir influençant la demande d'eau chaude de la brasserie, et pour commander la température de fluide caloporteur et/ou la température de fluide frigorigène arrivant au refroidisseur de moût (3).

11. Dispositif selon la revendication 10, **caractérisé en ce qu'**entre le refroidisseur de moût (3) et l'accumulateur d'eau froide et/ou accumulateur d'eau glacée (2), il est prévu un raccord de branchement d'eau (8) pour de l'eau de brassage froide et/ou chaude.

12. Procédé selon au moins la revendication 8, **caractérisé en ce que** concernant le caloporteur dans l'accumulateur de chaleur (7), il s'agit notamment d'eau de brassage, et/ou d'eau de service et/ou d'huile thermique.
